## Europäisches Patentamt
## European Patent Office
## Office européen des brevets

(11) Veröffentlichungsnummer : **0 158 022**
**B1**

(12) **EUROPÄISCHE PATENTSCHRIFT**

(45) Veröffentlichungstag der Patentschrift :
05.04.89

(51) Int. Cl.⁴ : **G 08 B 29/00, G 01 S 7/52**

(21) Anmeldenummer : 85101207.0

(22) Anmeldetag : 06.02.85

(54) Verfahren und Schaltungsanordnung zur Funktionskontrolle von Ultraschall-Alarmanlagen.

(30) Priorität : 13.02.84 CH 761/84

(43) Veröffentlichungstag der Anmeldung :
16.10.85 Patentblatt 85/42

(45) Bekanntmachung des Hinweises auf die Patenterteilung : 05.04.89 Patentblatt 89/14

(84) Benannte Vertragsstaaten :
BE CH DE FR GB IT LI NL SE

(56) Entgegenhaltungen :
CH--A-- 612 026
GB--A-- 1 006 362
US--A-- 3 932 870

(73) Patentinhaber : CERBERUS AG
Alte Landstrasse 411
CH-8708 Männedorf (CH)

(72) Erfinder : Steiner, Peter
Hombrechtikerstrasse 16
CH-8645 Jona (CH)
Erfinder : Genähr, Rudolf
Breitenloostrasse 4
CH-8708 Männedorf (CH)
Erfinder : Siegwart, David
Durststrasse 15
CH-8706 Meilen (CH)

(74) Vertreter : Tiemann, Ulrich, Dr.-Ing.
c/o Cerberus AG Patentabteilung Alte Landstrasse
411
CH-8708 Männedorf (CH)

## Beschreibung

Die Erfindung betrifft ein Verfahren zur Funktionskontrolle von Ultraschallalarmanlagen mit einem in einen überwachten Bereich Ultraschallwellen mit bestimmter Frequenz ausstrahlenden Ultraschallsender und einem Ultraschallaufnehmer zum Empfang von Ultraschallwellen aus dem überwachten Bereich und zur Umwandlung in ein elektrisches Signal, welches einer Auswerteschaltung zugeführt wird, die bei einer bestimmten Frequenzabweichung der empfangenen von den ausgestrahlten Ultraschallwellen ein Alarmsignal auslöst, wobei während einer Testphase eine Frequenzabweichung erzeugt wird, sowie eine Schaltungsanordnung zur Anwendung des Verfahrens.

Ein solches Verfahren ist beispielsweise aus der CH-A-612 026 bekannt. Dabei wird die Tatsache ausgenutzt, daß eine sich im überwachten Bereich bewegende Person infolge des Doppler-Effektes eine Frequenzänderung eines Teils der Ultraschallwellen mit einem seiner Bewegungsgeschwindigkeit entsprechenden Betrag verursacht, die von der Auswerteschaltung als Alarmzustand signalisiert wird. Hierzu wird die Frequenz der empfangenen Ultraschallwellen fortwährend mit der Sendefrequenz verglichen und bei für eine sich bewegende Person charakteristischen Frequenzabweichungen, wie z. B. in CH-A-556 070 beschrieben, ein Alarmsignal ausgelöst.

Bei dem in CH-A-612 026 beschriebenen Verfahren wird eine Funktionskontrolle der Ultraschall-Alarmanlage dadurch erreicht, dass während einer Test-Phase nicht die reine Sendefrequenz als Vergleichsfrequenz des Empfängers verwendet wird, sondern eine modulierte Schwingung. Hierbei wird die Modulation so gewählt, dass nach Mischung mit dem Empfänger-Signal ein Doppler-Signal entsteht, das dem einer sich bewegenden Person entspricht. Auch kann der Laufzeit-Unterschied der durch den überwachten Raum laufenden Ultraschall-Wellen und eines direkt vom Sender zum Empfänger, bzw. der Auswerteschaltung übertragenen elektrischen Referenzsignales zur Funktionskontrolle ausgenützt werden.

Diese vorbekannten Ultraschall-Alarmanlagen, bei denen kontinuierlich Ultraschall mit bestimmter Frequenz in den überwachten Bereich ausgestrahlt wird, haben jedoch den Nachteil, dass sich im Raum ein stehendes Wellenfeld bildet, bei dem sich die an verschiedenen Punkten reflektierten Wellen zusammen mit den ausgesandten Wellen im Empfänger je nach Amplitude und Phasenlage vektoriell zum Empfänger-Signal addieren. Je nach Anordnung der reflektierenden Objekte im Raum und den Umgebungsbedingungen kann daher das Empfänger-Signal in weiten Grenzen von Null bis zu einem Maximum schwanken. Zudem ändert sich das Signal, z. B. infolge Temperaturschwankungen, Aenderungen der Luftfeuchtigkeit oder des Luftdruckes laufend in weiten Grenzen, und entsprechend schwankt die Empfindlichkeit in der Testphase unkontrollierbar. Zu Zeiten eines schwachen Empfänger-Signales ergibt die Multiplikation mit einem modulierten Referenz-Signal jedoch ebenfalls nur ein schwaches Doppler-Signal, so dass die Funktionskontrolle unwirksam wird. Daher können auch Aenderungen der abgestrahlten Ultraschall-Energie, z. B. durch Abdecken des Senders bei einem Sabotage-Versuch, nicht von solchen zufälligen Schwankungen des Empfänger-Signales unterschieden werden.

Der vorliegenden Erfindung liegt die Aufgabe zugrunde, die erwähnten Nachteile vorbekannter Ultraschallalarmanlagen zu beseitigen und insbesondere bei solchen Anlagen eine möglichst universelle und von den Umgebungsbedingungen weitgehend unabhängige Funktionskontrolle zu gewährleisten, die außerdem einen Versuch, die Alarmanlage zu sabotieren und unwirksam oder unempfindlich zu machen, mit vergrößerter Sicherheit und mit möglichst geringem Schaltungsaufwand zu erkennen vermag.

Diese Aufgabe wird bei einem Verfahren der eingangs genannten Art dadurch gelöst, daß die Frequenz der ausgestrahlten Ultraschallwellen kurzzeitig aperiodisch derart moduliert wird, daß das durch die kurzzeitige aperiodische Modulation entstehende Frequenzband die zur Alarmauslösung ausgewertete Frequenzabweichung umfaßt und daß die Zeitdauer der Modulation länger gewählt wird als die direkte Laufzeit des Ultraschalls zwischen dem Sender und dem Aufnehmer, jedoch kürzer als die längstmögliche Laufzeit des Ultraschalls im überwachten Bereich.

Hierbei wird die Tatsache ausgenutzt, daß bei einer aperiodischen Modulation einer Grundfrequenz die Fourier-Analyse außer der Grundfrequenz auch benachbarte Frequenzen aufweist, also ein ganzes Frequenzband bildet. Wenn die Modulation entsprechend gewählt wird, kann erreicht werden, daß diese durch die Modulation kurzzeitig entstehenden Nachbarfrequenzen gerade in den Bereich der Frequenzabweichungen durch eine sich bewegende Person fallen, also mit der gleichen Auswerteschaltung verarbeitet werden können, wie die Doppler-Frequenzänderungen. Während der Betriebsphase wird durch die Auswerteschaltung dabei ein Alarm, während der Testphase jedoch die Funktionsfähigkeit signalisiert.

Die Modulation kann vorteilhafterweise aus einem einzigen rechteck- oder sinusförmigen Impuls oder einer Impulsreihe bestehen. Hierbei kann wahlweise die Grundfrequenz ausgeschaltet sein. Auch können die Impulse selbst wieder geeignet moduliert sein.

Die Erfindung wird an Hand der in den Figuren wiedergegebenen Diagramme und eines Schaltungs-Beispieles näher erläutert. Es zeigen :

Figur 1 das Schema einer Ultraschall-Alarmanlage,

Figur 2 und 3 zwei Möglichkeiten der Ultraschall-Modulation,

Figur 4 das Frequenzband der Modulation nach Figur 2 und 3,

Figur 5 eine weitere Möglichkeit der Modulation,

Figur 6 das Frequenzband der Modulation nach Figur 5,

Figur 7 das Schaltbild einer Ultraschall-Alarmanlage,

Figur 8 das Schaltbild einer weiteren Alarmanlage, und

Figur 9 den Signalverlauf der Alarmanlage nach Figur 8.

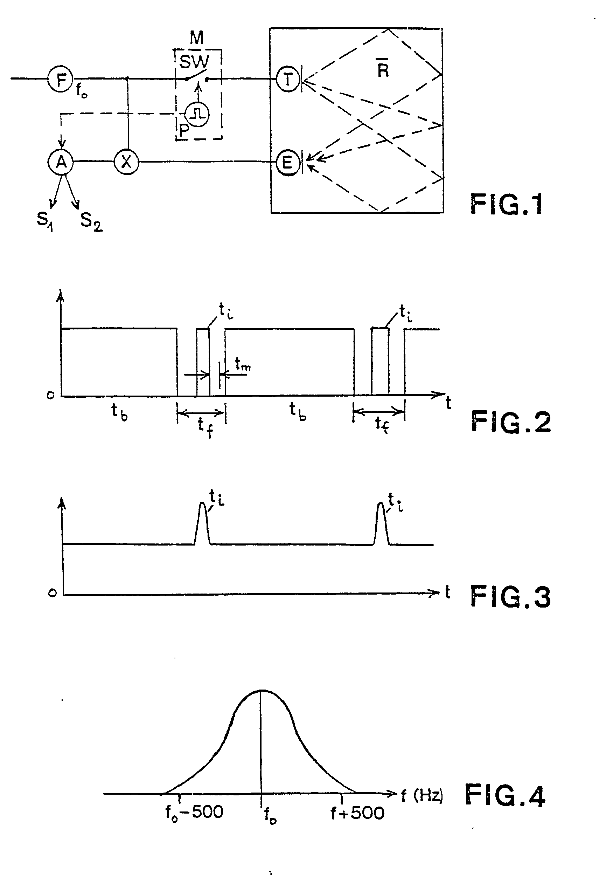

Bei der in Figur 1 wiedergegebenen Ultraschall-Alarmanlage werden in einen überwachten Raum oder Bereich $\overline{R}$ von einem Ultraschall-Sender T Ultraschall-Wellen ausgestrahlt und nach Reflexion von Wänden, Begrenzungen oder Objekten im Raum von einem Ultraschall-Aufnehmer E empfangen und in ein elektrisches Signal umgewandelt, das einer elektrischen Schaltung zugeleitet wird. Im normalen Betriebszustand wird der Sender T von einem Frequenzgeber F mit einer Frequenz $f_0$ angesteuert und zur kontinuierlichen Ausstrahlung von Ultraschall mit dieser Frequenz, z. B. 20 kHz, veranlasst. Solange im überwachten Raum R keine Bewegung stattfindet, erhält der Aufnehmer E nur Schall dieser Frequenz $f_0$. Am Ausgang des nachgeschalteten, ebenfalls vom Frequenzgeber angesteuerten Mischers oder Multiplikators X tritt dann keine Differenz-Frequenz auf, so dass die Auswerteschaltung A keine Frequenzabweichung detektiert und kein Signal gibt.

Sobald jedoch im überwachten Raum $\overline{R}$ eine Bewegung stattfindet, beispielsweise durch einen Einbrecher, erhält der Ultraschall-Aufnehmer E ausser Strahlung der Grundfrequenz $f_0$ Ultraschall-Wellen mit einer in Abhängigkeit von der Bewegungsgeschwindigkeit des Eindringlings nach dem Doppler-Effekt verschobenen Frequenz. Bei der genannten Grundfrequenz und den praktisch vorkommenden Bewegungsgeschwindigkeiten von Personen liegt diese Frequenzverschiebung zwischen 0 und mind. 500 Hz. Die Auswerteschaltung A wertet nun die vom Aufnehmer empfangenen Ultraschall-Wellen nach Durchgang durch den Mischer M in an sich bekannter Weise auf das Vorhandensein solcher Frequenzverschiebungen aus und gibt gegebenenfalls ein Alarmsignal. Dabei können zusätzlich noch andere Kriterien berucksichtigt werden, um Störeinflüsse zu eliminieren.

Zum Zwecke der Funktionskontrolle der Ultraschall-Alarmanlage wird der vom Sender ausgestrahlte Ultraschall kurzzeitig aperiodisch von einer Modulationseinrichtung M moduliert, die im dargestellten Beispiel aus einem Impulsgeber P und einem Schalter besteht. Die Art dieser Modulation ist so gewählt, dass deren Frequenzband gegenüber der Grundfrequenz $f_0$ verbreitert ist und benachbarte Frequenzen mit Einschluss der von der Auswerteschaltung A zur Signalgabe ausgewerteten Doppler-Verschiebungen umfasst. Die Auswerteschaltung A spricht also in diesem Fall nicht nur auf Doppler-Frequenzverschiebungen durch einen sich bewegenden Einbrecher während der normalen Betriebs-Phase an, sondern auch auf den Empfang von derart modulierten Ultraschallwellen während der Test-Phase, ohne die Notwendigkeit von Schaltungs-Aenderungen. Es ist lediglich zweckmässig, eine zusätzliche Ansteuerung der Auswerteschaltung A durch den Impulsgeber P vorzusehen, so dass ein Alarmsignal $S_1$ von einem Funktionsbereitschafts-Signal $S_2$ unterscheidbar ist. Die Zeitdauer der Modulation muss dabei so kurz gewählt werden, dass die Einschwingvorgänge noch nicht abgeklungen sind und sich noch keine stehenden Wellen ausbilden konnten. Dadurch wird sichergestellt, dass auch dann ein Funktionsbereitschafts-Signal gegeben wird, wenn in der Betriebs-Phase infolge der einleitend beschriebenen vektoriellen Addition der reflektierten Wellen verschiedenen Phasenlage das empfangene Ultraschall-Signal zufällig schwach oder fast Null ist. Wegen der Kurzzeitigkeit der Test-Modulation wird auch in diesem Fall mit Sicherheit ein Betriebsbereitschafts-Signal ausgelöst, vorausgesetzt, dass keine Störung vorliegt. Ein Sabotage-Versuch durch Abdecken des Ultraschall-Senders wurde als Störung gemeldet, auch wenn die Anlage zufällig in einem unempfindlichen Zustand ist.

Figur 2 zeigt das Zeitdiagramm einer besonders einfachen zur Funktionskontrolle geeigneten Modulation der ausgesandten Ultraschall-Wellen. Während der normalen Betriebs-Phase $t_b$ wird kontinuierlich Ultraschall mit einer Frequenz von z. B. 20 kHz oder darüber ausgestrahlt. Zur Durchführung der Funktionskontrolle wird der Ultraschall während einer Test-Phase $t_f$ manuell, automatisch oder periodisch in gewissen Intervallen während etwa 300 msec ausgeschaltet und innerhalb der Test-Phase wieder für etwa 10 msec eingeschaltet. Diese Einschaltzeit $t_i$ ist so kurz bemessen, dass sich keine stehenden Wellen im Raum während dieser Zeit ausbilden können, andererseits aber länger als die direkte Schall-Laufzeit des modulierten Signales vom Sender zum Empfänger. Die eigentliche Messzeit $t_m$ in der Test-Phase beginnt zweckmässigerweise erst gegen Ende des Impulses $t_i$ oder kurz danach. Dabei sollte sie kurz genug gewählt werden, um unter Berücksichtigung der Untergrenze der Doppler-Auswertung die direkte Schallübertragung vom Sender zum Empfänger oder die Reflexion an sehr nahen Objekten, z. B. der Senderabdeckung, für die Funktionskontrolle auszuschalten. Die Messzeit $t_m$ sollte aber auch nach oben begrenzt sein, um Objekte in grosser Distanz zu eliminieren und nur störende Objekte in der Nähe zu erfassen und somit einen Sabotageversuch im Nahbereich zu erfassen.

Figur 3 zeigt ein weiteres Diagramm einer geeigneten Modulation, wobei während der Test-Phase die Grundfrequenz nicht abgeschaltet wird, sondern lediglich die Amplitude kurzzeitig während der Zeit $t_i$ erhöht wird. Stattdessen kann auch die Amplitude kurzzeitig reduziert oder die Frequenz oder Phasenlage kurzzeitig variiert werden. Die Wirkung ist analog dem vorher beschriebenen Beispiel.

In Figur 4 ist das beim kurzzeitigen Einschalten einer Ultraschall-Schwingung gemäss den vorstehend beschriebenen Modulations-Beispielen entstehende Frequenzband wiedergegeben. Dieses umfasst nicht nur die Grundfrequenz $f_o$, sondern ist so verbreitert, dass auch benachbarte Frequenzen eingeschlossen sind, bei den genannten Zahlenbeispielen ein Bereich von etwa $f_o \pm 500$ Hz. Da die Doppler-Frequenzauswertung üblicherweise im Bereich von etwa 10-500 Hz erfolgt, kann das dargestellte Frequenzband mit der gleichen Auswerteschaltung ohne wesentliche Aenderungen zur Funktionskontrolle verarbeitet werden.

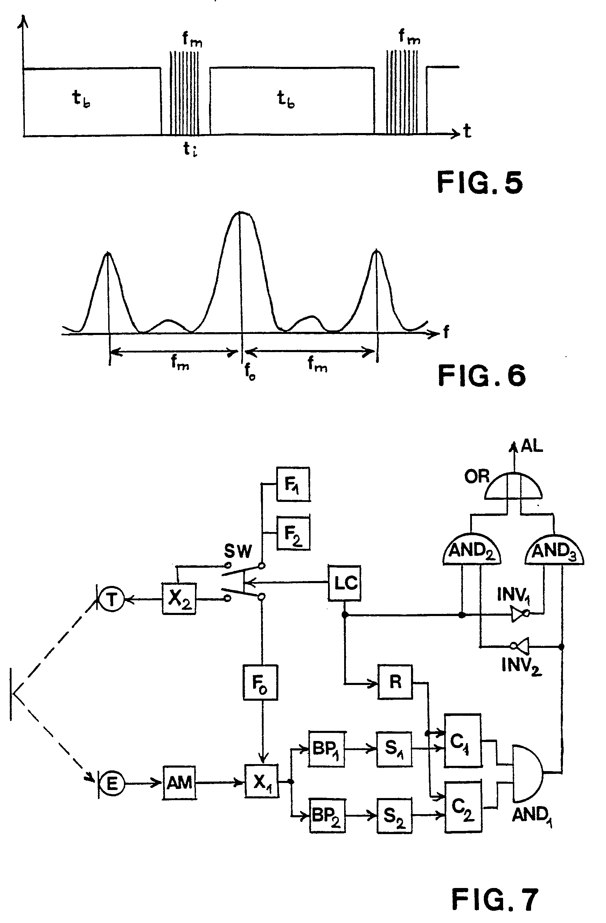

Bei dem in Figur 5 gezeigten Modulations-Diagramm besteht die Ultraschallwelle während der Einschaltzeit $t_i$ nicht aus einer einfachen Grundfrequenz, sondern aus einer mit einer Modulationsfrequenz $f_m$ modulierten Trägerfrequenz $f_o$. Das Frequenzspektrum besteht in diesem Falle, wie in Figur 6 dargestellt, aus einem zentralen Band um die Trägerfrequenz $f_o$ mit Seitenbändern im Abstand $f_m$, und gegebenenfalls Seitenbändern höherer Ordnung. Durch geeignete Wahl der Modulationsfrequenz kann in diesem Beispiel erreicht werden, dass die Seitenbänder genau in einem gewünschten Auswertekanal für die Doppler-Frequenzverschiebung liegen. Dies kann bei Auswerteschaltungen wichtig sein, bei denen aus Gründen der Störsicherheit nur enge Auswertekanäle vorgesehen sind.

Es wird bemerkt, dass die gleiche Wirkung wie mit einem Ein- und Ausschalten auch mit einem Amplituden-, Frequenz- oder Phasensprung als aperiodische Modulation erreicht werden kann. Eine Frequenzverbreiterung tritt auch hier auf.

Figur 7 zeigt die Schaltung einer Ultraschall-Alarmanlage mit zwei Doppler-Auswertekanälen und zusätzlich einer erfindungsgemässen Funktionskontroll-Schaltung. Hierbei wird der Ultraschall-Sender T von einem Frequenz-Generator $F_o$ mit einer Frequenz $f_o$ über eine Schaltvorrichtung SW und einem Mischer $X_2$ angesteuert. Eine logische Steuerschaltung LC steuert die Schaltvorrichtung SW wie in den vorstehend beschriebenen Beispielen so, dass während einer Test-Phase der Frequenzgenerator $F_o$ zeitweise aus- und eingeschaltet ist. Ausserdem werden während des kurzzeitigen Testimpulses zwei weitere Frequenzgeber $F_1$ und $F_2$ mit den Frequenzen $f_{m1}$ und $f_{m2}$ über den Mischer $X_2$ gleichzeitig oder kurz hintereinander an den Sender T zugeschaltet. Dabei sind die beiden Frequenzen $f_{m1}$ und $f_{m2}$ so gewählt, dass ihre Schwebungsfrequenzen mit der Grundfrequenz $f_o$ gerade in den beiden Doppler-Auswertekanälen der Auswerteschaltung liegen. Das elektrische Signal des Ultraschall-Aufnehmers E wird über einen Verstärker AM, der frequenzselektiv für die Umgebung von $f_o$ sein kann, und über einen vom Frequenzgenerator $F_o$ ebenfalls angesteuerten Mischer oder Multiplikator $X_1$ den beiden Auswertekanälen zugeleitet. Diese weisen je einen Bandpass $BP_1$ bzw. $BP_2$ mit unterschiedlichem Durchlassbereich für die Dopplerfrequenzen des Mischers auf, z. B. einen unteren Bereich zwischen 20 und 50 Hz und einen oberen Bereich zwischen 60 und 100 Hz, je eine nachgeschaltete Speicherschaltung $S_1$ bzw. $S_2$, die als Integratoren ausgebildet sein können, die ein Signal während einer bestimmten Zeit festhalten, und je eine Komparatorschaltung $C_1$ bzw. $C_2$, die ein Signal nur abgeben, wenn ein von einer logischen Steuerschaltung LC während der Testphase in vorgegebener Weise geändertes Signal eines Referenzgenerators R während der Test-Phase überschritten wird. Beide Auswertekanäle sind durch ein UND-Tor $AND_1$ verbunden, das nur dann ein Ausgangssignal an ein weiteres UND-Tor $AND_3$ weitergibt, wenn ein Signal in beiden Auswertekanälen ansteht, d. h. wenn Doppler-Frequenzen in beiden Frequenz-Bereichen vorhanden sind, oder beide Kanäle funktionieren.

Das Signal des UND-Tores $AND_1$ wird dann dem Eingang des UND-Tores $AND_3$, dessen anderer Eingang von der logischen Steuerschaltung LC über eine Inverter $INV_1$ angesteuert wird, und gleichzeitig über einen Inverter $INV_2$ einem weiteren UND-Tor $AND_2$, das von der logischen Steuerschaltung LC direkt angesteuert ist, zugeleitet. Die Ausgänge der beiden UND-Tore $AND_2$ und $AND_3$ sind an die Eingänge eines ODER-Tores OR angeschlossen, welches ein Alarmsignal AL abgibt, wenn eines der UND-Tore $AND_3$ oder $AND_2$ ein Ausgangssignal zeigen. Mit dieser Schaltung wird erreicht, dass während der normalen Betriebs-Phase, in der kein Steuersignal gegeben wird, also $AND_2$ geschlossen, jedoch $AND_3$ geöffnet ist, über das Tor $AND_3$ ein Alarmsignal ausgelöst wird, wenn in beiden Auswertekanälen ein Dopplersignal von einem Eindringling vorhanden ist und am Ausgang des Tores $AND_1$ erscheint. Andererseits ist während einer Test-Phase, während der ein Signal der logischen Steuerschaltung LC ansteht, also Tor $AND_2$ geöffnet, aber Tor $AND_3$ über den Inverter $INV_1$ geschlossen ist, die Alarmsignalgabe durch den Inverter $INV_2$ blockiert, wenn am Ausgang von Tor $AND_1$ ein Signal ansteht, also wenn das Testsignal über beide Auswertekanäle korrekt eintrifft. Falls jedoch kein Ausgangssignal am Tor $AND_1$ auftritt, wird über $AND_2$ ein Alarmsignal ausgelöst, was die Funktionsunfähigkeit der Anlage, z. B. infolge Sabotage oder von Komponenten-Ausfall oder anderer Defekte, signalisiert.

Mit der beschriebenen Auswerteschaltung werden sowohl die Vorteile der Mehrkanalauswertung gewahrt, die darin bestehen, dass geprüft wird, ob gleichzeitig oder kurz hintereinander innerhalb der Haltezeit der Speicherschaltungen $S_1$ und $S_2$ Doppler-Signale in beiden Kanälen auftreten, wie sie für die Bewegung von Personen charakteristisch sind, und andererseits mit der gleichen Schaltung die Funktion aller Komponenten, einschliesslich der beiden Auswertekanäle, gleichzeitig überprüft werden kann. Jedoch lässt sich der Erfindungsgedanke auch bei Schaltungen mit nur einem Auswertekanal anwenden. Auch andere Varianten sind im Rahmen des Erfindungsgedankens möglich.

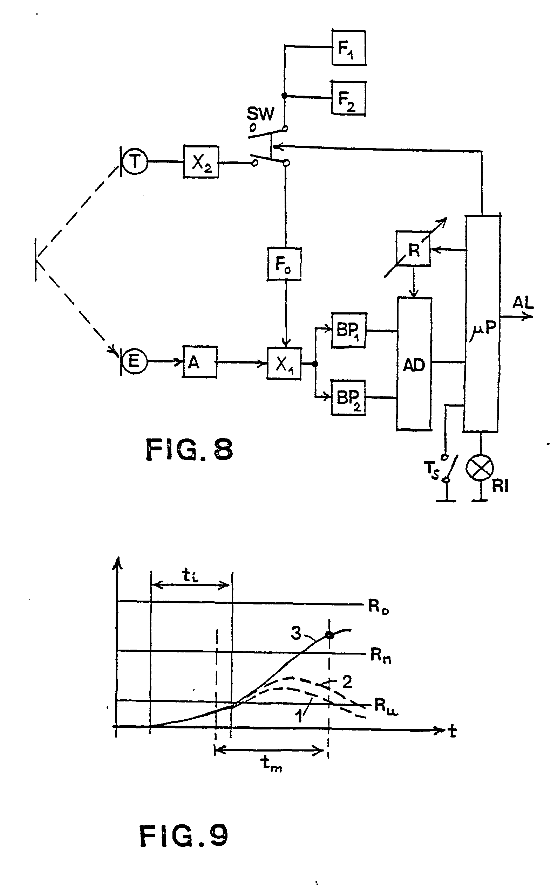

So zeigt Figur 8 eine besonders zweckmässige und vorteilhafte Weiterbildung der vorstehend beschriebenen Schaltung, wobei entsprechende Komponenten mit den gleiohen Bezugszeichen versehen sind. Statt mit diskreten Komponenten arbeitet diese Schaltung jedoch mit einem Mikroprozessor $\mu$P mit vorgeschaltetem Analog-Digital-Wandler AD. Damit lässt sich die Sabotage-Sicherheit noch weiter steigern und verbessern, indem die Alarmanlage automatisch an veränderte Raumbedingungen, z. B. an absichtlich im Raum vorgenommene Aenderungen, anpassbar ist.

Dazu werden in der Test-Phase die Ausgangs-Signale der zwei oder mehr Bandpässe $BP_1$, $BP_2$... in dem Analog-Digital-Wandler AD in ein Digital-Signal gewandelt und vom Mikroprozessor $\mu$P aufgenommen. Dabei kann die Signal-Zuleitung zum Wandler AD auch mit einem vorgeschalteten Multiplexer realisiert werden. Bei der Inbetriebsetzung der Alarmanlage oder bei einer späteren Aenderung der Raum-Anordnung wird auf Verlangen durch Betätigung des Schalters $T_s$ eine einzelne Test-Phase durchlaufen und das durch Verknüpfung der Resultate der einzelnen Bandpasse gewonnene Resultat im Mikroprozessor $\mu$P gespeichert. Diese Verknüpfung kann, wie in Figur 9 gezeigt, z. B. derart geschehen, dass die Ausgangssignale der Bandpässe $BP_1$, $BP_2$, deren Verlauf durch die Kurven 1 und 2 in Figur 9 wiedergegeben ist, jeweils integriert und addiert werden, was die Kurve 3 ergibt, wobei der Endwert der Kurve 3 am Schluss der Mess-Phase $t_m$ das Resultat $R_m$ für den Mikro-Prozessor darstellt. Der Mikroprozessor $\mu$P aktiviert nun eine Anzeige $R_i$ solange, bis durch Veränderung oder Nachstellung des Referenzgebers R der über den AD-Wandler gemessene Referenzwert mit dem Resultat der vorhergehenden Test-Phase übereinstimmt. Im Betrieb wird dann am Ende jeder Test-Phase das aktuelle, nach der gleichen Methode wie bei der Inbetriebsetzung gewonnene Resultat mit dem am Referenzgeber eingestellten Resultat $R_n$ verglichen und ein Alarm gegeben, wenn im Mikroprozessor eingestellte obere oder untere Grenzwerte $R_0$ bzw. $R_u$ überschritten werden.

## Patentansprüche

1. Verfahren zur Funktionskontrolle von Ultraschallalarmanlagen mit einem in einen überwachten Bereich (R) Ultraschallwellen mit bestimmter Frequenz (fo) ausstrahlenden Ultraschallsender (T) und einem Ultraschallaufnehmer (E) zum Empfang von Ultraschallwellen aus dem überwachten Bereich (R) und zur Umwandlung in ein elektrisches Signal, welches einer Auswerteschaltung (A) zugeführt wird, die bei einer bestimmten Frequenzabweichung der empfangenen von den ausgestrahlten Ultraschallwellen ein Alarmsignal (AL, S1) auslöst, wobei während einer Testphase (ti) eine Frequenzabweichung erzeugt wird, dadurch gekennzeichnet, daß die Frequenz (fo) der ausgestrahlten Ultraschallwellen kurzzeitig (ti) aperiodisch derart moduliert wird, daß das durch die kurzzeitige aperiodische Modulation entstehende Frequenzband die zur Alarmauslösung ausgewertete Frequenzabweichung umfaßt und daß die Zeitdauer (ti) der Modulation länger gewählt wird als die direkte Laufzeit des Ultraschalls zwischen dem Sender (T) und dem Aufnehmer (E), jedoch kürzer als die längstmögliche Laufzeit des Ultraschalls im überwachten Bereich (R).

2. Verfahren gemäß Patentanspruch 1, dadurch gekennzeichnet, daß die aperiodische Modulation durch einen Ultraschallimpuls mit der Frequenz (fo) der Ultraschallwellen und einer bestimmten kurzen Zeitdauer (ti) gebildet wird.

3. Verfahren gemäß Patentanspruch 2, dadurch gekennzeichnet, daß die Ausstrahlung der Ultraschallwellen während der Testphase (tf), in welcher der Ultraschallimpuls ausgestrahlt wird, unterbrochen wird.

4. Verfahren gemäß einem der Patentansprüche 2 und 3, dadurch gekennzeichnet, daß die Ultraschallwellen während des in der Testphase ausgestrahlten Ultraschallimpulses (ti) zusätzlich mit einer solchen Frequenz (fm) moduliert werden, daß die bei einer Mischung mit der Ultraschallfrequenz (fo) entstehenden Schwebungsfrequenzen, in den zur Alarmagabe ausgewerteten Bereich der Frequenzabweichungen fallen.

5. Verfahren gemäß einem der Patentansprüche 2 bis 4, dadurch gekennzeichnet, daß die Funktionskontrolle innerhalb der Testphase (tf) während einer Meßzeit (tm) vorgenommen wird, deren Zeitdauer nach oben auf einen vergegebenen Wert beschränkt ist und/oder die nach Ablauf der Zeitdauer (ti) der Modulation beginnt.

6. Verfahren gemäß Patentanspruch 1, dadurch gekennzeichnet, daß die aperiodische Modulation in einer kurzzeitigen Amplituden-, Frequenz-, oder Phasenänderung oder in einem Amplituden-, Frequenz- oder Phasensprung besteht.

7. Schaltungsanordnung zur Anwendung des Verfahrens gemäß einem der Patentansprüche 1 bis 7 mit einem in einen überwachten Bereich (R) Ultraschallwellen bestimmter Frequenz ausstrahlenden Ultraschallsender (T), einem Ultraschallaufnehmer (E) zum Empfang von Ultraschallwellen aus dem überwachten Bereich (R) und einer daran angeschlossenen elektrischen Auswerteschaltung (A), welche bei einer bestimmten Frequenzabweichung der empfangenen von den ausgestrahlten Ultraschallwellen ein Alarmsignal auslöst, dadurch gekennzeichnet, daß zur Funktionskontrolle eine Modulationseinrichtung (M) vorgesehen ist, die ausgebildet ist, die Frequenz der ausgestrahlten Ultraschallwellen für eine Zeitdauer (ti), welche länger ist als die direkte Laufzeit des Ultraschalls zwischen dem Sender (T) und dem Aufnehmer (E), jedoch kürzer als die längstmögliche Laufzeit des Ultraschalls im überachten Bereich (R), aperiodisch derart zu modulieren, dass das dabei entstehende Frequenzband die von der Auswerteschaltung (A) zur Alarmsignalauslösung ausgewerteten Frequenzabweichungen umfaßt.

8. Schaltungsanordnung gemäß Patentanspruch 7, dadurch gekennzeichnet, daß in der Modulationseinrichtung (M) eine Schalteinrichtung (SW) vorgesehen ist, welche von einer Steuereinrichtung (P, LC) zum Aus- und Einschalten der Ultraschallwellen ansteuerbar ist.

9. Schaltungsanordnung gemäß Patentanspruch 8, dadurch gekennzeichnet, daß eine Mischungseinrichtung (X₂) vorgesehen ist, mittels der von der Steuereinrichtung (LC) über die Schalteinrichtung (SW) wenigstens eine weitere Frequenz (fm1, fm2) den Ultraschallwellen beimischbar ist, wobei die weiteren Frequenzen so gewählt sind, daß die bei der Mischung mit der Frequenz (fo) der Ultraschallwellen entstehenden Schwebungsfrequenzen in den Auswertebereich der Auswerteschaltung zu Alarmsignalauslösung fallen.

10. Schaltungsanordnung gemäß einem der Patentansprüche 8 und 9, dadurch gekennzeichnet, daß eine logische Schaltung (AND₁, AND₂, AND₃, INV₁, INV₂, OR) vorgesehen ist, welche von der Steuereinrichtung (LC) derart gesteuert wird, daß während einer Betriebsphase ein von der Auswerteschaltung erzeugtes Alarmsignal durchgelassen wird, während einer Testphase jedoch ein Alarmsignal der Auswerteschaltung blockiert wird, hingegen bei Abwesenheit eines Alarmsignals der Auswerteschaltung ein Ausgangssignal erzeugt wird.

11. Schaltungsanordnung gemäß einem der Patentansprüche 7 bis 10, dadurch gekennzeichnet, daß ein Mikroprozessor (μP) vorgesehen ist, welcher eingerichtet ist, bei einer bestimmten Testphase das Signal der Auswerteschaltung zu speichern und bei folgenden Testphasen das dann auftretende Signal der Auswerteschaltung mit dem gespeicherten Signal zu vergleichen und bei vorgegebenen Abweichungen des Signals vom gespeicherten Signal ein Alarmsignal abzugeben.

**Claims**

1. Method for monitoring the operation of ultrasonic alarm systems having an ultrasonic transmitter (T) emitting ultrasonic waves of definite frequency (fo) in a zone under surveillance (Sp) and an ultrasonic sensor (S) for receiving ultrasonic waves from the zone under surveillance (Sp) and for transformation into an electrical signal that is led to an evaluation unit (A), which, for a definite frequency deviation of the received from the emitted ultrasonic waves, trips an alarm signal (Al, S1), a frequency deviation being generated during a test phase (ti), characterized in that the frequency (fo) of the emitted ultrasonic waves is modulated momentarily (ti) aperiodically in such a way that the frequency band produced by the momentary aperiodic modulation embraces the frequency deviation evaluated for tripping the alarm, and in that the duration (ti) of the modulation is chosen to be longer than the time of the direct propagation of the ultrasound between the transmitter (T) and the sensor (S), but shorter than the longest possible time of propagation of the ultrasound in the zone under surveillance (Sp).

2. Method according to Patent Claim 1, characterized in that the aperiodic modulation is formed by an ultrasonic pulse having the frequency (fo) of the ultrasonic waves, and a definite short duration (ti).

3. Method according to Patent Claim 2, characterized in that the emission of the ultrasonic waves is interrupted during the test phase (tf), in which the ultrasonic pulse is emitted.

4. Method according to one of the Patent Claims 2 and 3, characterized in that during the ultrasonic pulse (ti) emitted in the test phase, the ultrasonic waves are additionally modulated by a frequency (fm) such that the beat frequencies arising during mixing with the ultrasonic frequency (fo) fall in the range of the frequency deviations evaluated for giving the alarm.

5. Method according to one of the Patent Claims 2 to 4, characterized in that the monitoring of the operation is undertaken within the test phase (tf) during a measurement time (tm), the duration of which is bounded above by a predetermined value, and/or begins after expiry of the duration (ti) of the modulation.

6. Method according to Patent Claim 1, characterized in that the aperiodic modulation consists in a change in amplitude, frequency or phase, or in a jump in amplitude, frequency or phase.

7. Circuit arrangement for applying the method according to one of Patent Claims 1 to 7, having an ultrasonic transmitter (T) emitting ultrasonic waves of definite frequency in a zone (Sp) under surveillance, an ultrasonic sensor (S) for receiving ultrasonic waves from the zone (Sp) under surveillance, and an electrical evaluation unit (E) connected thereto, which, for a definite frequency deviation of the received from the emitted ultrasonic waves, trips an alarm signal, characterized in that a modulation device (M) is provided for monitoring the operation, which is designed aperiodically to modulate the frequency of the emitted ultrasonic waves for a duration (ti), which is longer than the time of the direct propagation of the ultrasound between the transmitter (T) and the sensor (S), but shorter than the longest possible time of propagation of the ultrasound in the zone under surveillance (Sp) in such a way that the frequency band thereby produced embraces the frequency deviations evaluated by the evaluation unit (E) for tripping the alarm.

8. Circuit arrangement according to Patent Claim 7, characterized in that a switching facility (SW) is provided in the modulation device (M), and can be controlled by a control device (P, LC) in order to switch ultrasonic waves off and on.

9. Circuit arrangement according to Patent Claim 8, characterized in that a mixing device (X2) is provided, by means of wich at least one further frequency (fm1, fm2) can be added by the control device (LC) via the switching facility (SW), the further frequencies being chosen in such a way that the beat frequencies arising during the mixing with the frequency (fo) of the ultrasonic waves fall into the evaluation band of the evaluation circuit for tripping the alarm signal.

10. Circuit arrangement according to one of the Patent Claims 8 and 9, characterized in that a logic circuit (AND1, AND2, AND3, INV1, INV2, OR) is provided, which is driven by the control device (LC) in such a way that during an operating phase an alarm signal generated by the evaluation circuits is passed, during a test phase, however, an alarm signal of the evaluation circuit is blocked, whereas in the absence of an alarm signal of the evaluation circuit an output signal is generated.

11. Circuit arrangement according to one of the Patent Claims 7 to 10, characterized in that a microprocessor ($\mu$P) is provided, which is set up to store the signal of the evaluation circuit in a definite test phase, and in following test phases to compare the signal of the evaluation circuit then occurring with the stored signal, and, given predetermined deviations of the signal from the stored signal, to transmit an alarm signal.

**Revendications**

1. Procédé pour contrôler le fonctionnement d'installations d'alarme ultrasonores comportant un émetteur d'ultrasons (T) émettant des ondes ultrasonores possédant une fréquence (fo) déterminée, dans une zone contrôlée (R) et un récepteur d'ultrasons (E) servant à recevoir des ondes ultrasonores en provenance de la zone contrôlée (A) et à les convertir en un signal électrique envoyé à un circuit d'évaluation (A) qui, dans le cas d'un écart déterminé de fréquence par rapport à la fréquence reçue des ondes ultrasonores émises, déclenche un signal d'alarme (AL, S1), un écart de fréquence étant produit pendant une phase d'essai (ti), caractérisé par le fait qu'on module de façon apériodique, pendant un bref intervalle de temps (ti), la fréquence (fo) des ondes ultrasonores émises de manière que la bande de fréquences, qui est produite sous l'effet de la modulation apériodique de brève durée, englobe l'écart de fréquence évalué pour le déclenchement de l'alarme, et qu'on choisit la durée (ti) de la modulation supérieure à la durée directe de propagation des ultrasons entre l'émetteur (T) et le récepteur (E), mais inférieure à la durée maximale possible de propagation des ultrasons dans la zone contrôlée (A).

2. Procédé suivant la revendication 1, caractérisé par le fait que la modulation apériodique est réalisée à l'aide d'une impulsion ultrasonore possédant la fréquence (fo) des ondes ultrasonores et une brève durée déterminée (ti).

3. Procédé suivant la revendication 2, caractérisé par le fait qu'on interrompt l'émission des ondes ultrasonores pendant la phase d'essai (tf), pendant laquelle l'impulsion ultrasonore est émise.

4. Procédé suivant l'une des revendications 2 et 3, caractérisé par le fait que pendant l'impulsion ultrasonore (ti) émise lors de la phase d'essai, on module en supplément les ondes ultrasonores avec une fréquence (fm) telle que les fréquences de battement, qui apparaissent lors d'un mélange avec la fréquence ultrasonore (fo), se situent dans la plage des écarts de fréquences, évalués pour la délivrance de l'alarme.

5. Procédé suivant l'une des revendications 2 à 4, caractérisé par le fait que le contrôle de fonctionnement est exécuté pendant la phase d'essai (tf) au cours d'un intervalle de mesure (tm), dont la durée est limitée, en valeur supérieure, à une valeur prédéterminée et/ou qui commence après l'écoulement de la durée (ti) de la modulation.

6. Procédé selon la revendication 1, caractérisé en ce que la modulation apériodique consiste en une modification de brève durée de l'amplitude, de la fréquence ou de la phase ou en un saut d'amplitude, de fréquence ou de phase.

7. Montage pour la mise en œuvre du procédé selon l'une des revendications 1 à 7, comportant un émetteur à ultrasons (T) émettant les ondes ultrasonores possédant une fréquence déterminée dans une zone contrôlée (R), un récepteur d'ultrasons (E) servant à recevoir des ondes ultrasonores provenant de la zone contrôlée (T) et un circuit électrique d'évaluation (T), qui est raccordé à ce récepteur et déclenche un signal d'alarme dans le cas d'un écart déterminé de fréquence entre les ondes reçues et les ondes ultrasonores émises, caractérisé par le fait que pour le contrôle du fonctionnement, il est prévu un dispositif de modulation (M) agencé de manière à moduler de façon apériodique la fréquence des ondes ultrasonores émises, pendant un intervalle de temps (ti) supérieur à la durée de propagation directe des ultrasons entre l'émetteur (A) et le récepteur (T), mais inférieur à la durée la plus longue possible de propagation des ultrasons dans la zone contrôlée (A), de telle sorte que la bande de fréquences obtenue englobe les écarts de fréquence évalués par le circuit d'évaluation (A) pour déclencher le signal d'alarme.

8. Montage suivant la revendication 7, caractérisé par le fait que dans le dispositif de modulation (M) il est prévu un dispositif de commutation (SW) qui peut être commandé par un dispositif de commande (P, LC) servant à interrompre et déclencher les ondes ultrasonores.

9. Montage suivant la revendication 8, caractérisé en ce qu'il est prévu un dispositif mélangeur (X2), à l'aide duquel au moins une fréquence supplémentaire (fm1, fm2) peut être mélangée aux ondes ultrasonores par le dispositif de commande (LC), par l'intermédiaire du dispositif de commutation (SW), les fréquences supplémentaires étant choisies de manière que les fréquences de battement, qui apparaissent lors du mélange avec la fréquence (fo) des ondes ultrasonores, se situent dans la plage d'évaluation du circuit d'évaluation servant à déclencher le signal d'alarme.

10. Montage suivant l'une des revendications 8 et 9, caractérisé par le fait qu'il est prévu un circuit logique (AND1, AND2, AND3, INV1, INV2, OR) qui est commandé par le dispositif de commande (LC) de telle sorte que, pendant une phase de fonctionnement, un signal d'alarme produit par le circuit d'évaluation est transmis, tandis que pendant une phase d'essai un signal d'alarme du circuit d'évaluation est bloqué, alors qu'en l'absence d'un signal d'alarme du circuit d'évaluation, un signal de sortie est produit.

11. Montage suivant l'une des revendications 7 à 10, caractérisé par le fait qu'il est prévu un microprocesseur (µP) qui est réglé de manière à mémoriser, lors d'une phase d'essai déterminée, le signal du circuit d'évaluation et à comparer, lors de phases d'essai suivantes, le signal, qui apparaît alors, du circuit d'évaluation au signal mémorisé et à délivrer un signal d'alarme dans le cas d'écarts prédéterminés du signal par rapport au signal mémorisé.

FIG.1

FIG.2

FIG.3

FIG.4

**FIG. 5**

**FIG. 6**

**FIG. 7**

2

FIG.8

FIG.9